# EUROPEAN PATENT SPECIFICATION

(11) **EP 2 272 930 B1**
(45) Date of publication and mention of the grant of the patent: **04.03.2015**
(21) Application number: 10168059.3
(22) Date of filing: 01.07.2010
(51) Int. Cl.: C09J 7/04

(54) **Releasable double-sided pressure-sensitive adhesive sheet**
Wiederablösbare doppelseitige Haftdruckklebefolie
Feuille adhésive double face sensible à la pression et démontable

(30) Priority: 09.07.2009 JP 2009163097
(43) Date of publication of application: 12.01.2011
(73) Proprietor: Nitto Denko Corporation, Ibaraki-shi, Osaka 567-8680 (JP)
(72) Inventor: Suzuki, Toshihide, Ibaraki-shi Osaka 567-8680 (JP); Yamamoto, Kenichi, Ibaraki-shi Osaka 567-8680 (JP); Takahashi, Akiko, Ibaraki-shi Osaka 567-8680 (JP)
(74) Representative: Grünecker, Kinkeldey, Stockmair & Schwanhäusser

(56) References cited:
- EP-A2- 1 930 387
- EP-A2- 1 990 388
- DATABASE WPI Week 199642 Thomson Scientific, London, GB; AN 1996-422214 XP002601305 -& JP 8 209086 A (DAINIPPON INK & CHEM INC) 13 August 1996 (1996-08-13)
- DATABASE WPI Week 200062 Thomson Scientific, London, GB; AN 2000-643089 XP002601306 -& JP 2000 265140 A (HITACHI KASEI POLYMER KK) 26 September 2000 (2000-09-26)

## Description

### BACKGROUND OF THE INVENTION

### 1. Field of the Invention

The present invention relates to a double-sided adhesive pressure-sensitive adhesive (PSA) sheet having a nonwoven fabric as a substrate and PSA layers formed from a water-dispersed acrylic PSA composition on both faces of the substrate. More particularly, the present invention relates to a double-sided PSA sheet that is suitable for affixing to parts to be recycled.

### 2. Description of the Related Art

PSA sheets having double-sided adhesion (double-sided PSA sheets) and that comprise a substrate are widely used as bonding means that boast high adhesion reliability and good workability in various industrial fields, for instance home appliances, automobiles, office automation equipment and so forth. Nonwoven fabrics are preferably used as the above substrate. Examples of double-sided PSA sheets using nonwoven fabric substrates are disclosed in, for instance, Japanese Patent Application Publication Nos. 2008-280439, 2006-143856, 2001-152111 and 2000-265140.

### SUMMARY OF THE INVENTION

Recent years have witnessed a growing use of recyclable parts in finished articles, with energy and resource savings in mind. The parts are dismantled after use and the parts, or the constituent elements thereof, are re-used (recycled). From the viewpoint of environmental consideration and reducing emissions of volatile organic compounds (VOCs), there is a shift towards the use of water-dispersed (aqueous) PSA compositions in which the PSA components are dispersed in water. Therefore, it would be useful to provide a double-sided PSA sheet that comprises PSA layers formed from a water-dispersed PSA composition, and that can be bonded to parts to be recycled.

To reuse the parts or the like bonded using a double-sided PSA sheet, it is necessary to separate parts from each other at the bonding portion, and, after separation, to remove the double-sided PSA sheet from the parts. During separation of the parts, the double-sided PSA sheet at the bonding portion may tear halfway, or may suffer interlaminar fracture within the substrate layer, along the bonding face. Residue (adhesive residue) stemming from the PSA layers and remaining on the adherend is a further problem. When the above instances occur during removal of the double-sided PSA sheet from separated parts, it is necessary to remove the torn double-sided PSA sheet and/or the residue of the PSA layer from the surface of the separated parts, all of which lowers significantly the efficiency of the part dismantling operation. Therefore, the double-sided PSA sheet used for bonding parts to be recycled must have releasing ability (removability or the like) that allows the PSA sheet to be detached efficiently from parts. Such double-sided PSA sheets must also bring out PSA performance (adhesive strength, curved surface adhesion and the like that allow preserving bonding semi-permanently) in addition to the original purpose, shared by conventional PSA sheets, namely bonding to parts.

However, water-dispersed (aqueous) acrylic PSA compositions tend to have a weaker adhesive strength than solvent-based PSA compositions. Also, the strength of the nonwoven fabric may drop when the latter is impregnated with a water-dispersed composition. Therefore, it has been difficult to manufacture double-sided PSA sheets that manage a good balance between PSA performance and releasing ability, as described above, when using a water-dispersed composition. None of the above prior art documents has dealt satisfactorily with this problem.

Accordingly, it is an object of the present invention to provide a double-sided PSA sheet having PSA layers formed from a water-dispersed PSA composition, so that the double-sided PSA sheet combines PSA characteristics and releasing ability and can be suitably used also in, for instance, parts to be recycled.

The present invention provides a double-sided adhesive PSA sheet according to claim 1 comprising a nonwoven fabric as a substrate (nonwoven fabric substrate), and PSA layers respectively provided on both faces of the substrate. The nonwoven fabric comprises hemp as a constituent fiber and has a bulk density from about 0.35 to 0.60 g/cm³. The PSA layers are formed from a PSA composition in the form of an aqueous dispersion (water-dispersed acrylic PSA composition) comprising an acrylic polymer as the PSA component. The acrylic polymer is obtained through emulsion polymerization of a monomer starting material that contains an alkyl (meth)acrylate having an alkyl group of 4 to 12 carbon atoms, in a proportion equal to or greater than 60 wt% of the entire monomer component. The double-sided PSA sheet manufactured using the above PSA composition satisfies both of the characteristics below.
A: an average value of peel strength (SUS adhesive strength) of both PSA faces to a stainless steel plate (SUS) at 180° is equal to or greater than 11 N/20 mm; and
B: an average value of peel strength (PP adhesive strength) of both PSA faces to a polypropylene plate at 180° is equal to or greater than 8.5 N/20 mm.

The nonwoven fabric has high strength since it comprises hemp (typically, Manila hemp) as a constituent fiber, and the bulk density of the nonwoven fabric lies within an appropriate range. This allows preventing tearing and interlaminar fracture when a double-sided PSA sheet using such a nonwoven fabric as a substrate and having the above high SUS adhesive strength and PP adhesive strength, is separated (removed) from an adherend. Therefore, such a double-sided PSA sheet allows realizing a good balance between high PSA strength and good removability (no tearing, adhesive residue or the like upon removal).

The PSA layers of the above double-sided PSA sheet exhibit high adhesion to both polar materials such as SUS and low-polar materials such as PP. Therefore, the double-sided PSA sheet can be preferably used in various applications, as in the case of ordinary double-sided PSA sheets (for instance, for semi-permanent fixing of adherends such as parts or the like). At the same time, the double-sided PSA sheet can be removed from the adherend without leaving adhesive residue and without sheet breakage (tearing, interlaminar fracture or the like). As a result, the double-sided PSA sheet can be preferably used, in particular, for bonding of parts to be recycled.

The nonwoven fabric substrate is selected in such a manner that the grammage thereof ranges from 20 g/m² to 30 g/m² and the thickness thereof from 35 µm to 85 µm, and so that the bulk density calculated by dividing the grammage by the thickness lies within the above bulk density range. A yet better PSA performance (for instance, curved surface adhesion) and releasing ability (removability) can be realized as a result.

In a preferred embodiment, the nonwoven fabric used as the substrate has a tensile strength (hereafter also referred to as MD tensile strength) in a machine direction (MD direction) equal to or greater than 20 N/15 mm, and a tensile strength (hereafter also referred to as CD tensile strength) in a cross-machine direction (CD direction) equal to or greater than 15 N/15 mm. A double-sided PSA sheet having such a nonwoven fabric substrate is preferable, as it affords removal from adherends yet more reliably free of sheet tearing.

In another preferred embodiment, the interlaminar strength of the nonwoven fabric is equal to or greater than 5 N/20 mm. A double-sided PSA sheet comprising such a nonwoven fabric substrate is preferable, as it affords removal from adherends without occurrence of interlaminar fracture.

In another preferred embodiment, the double-sided PSA sheet satisfies at least one of the following characteristics:
C: the holding time in a holding power test at 40°C is 1 hour or longer for both PSA faces; and
D: the lift distance in a curved surface adhesion test is no greater than 10 mm. More preferably, the double-sided PSA sheet satisfies both C and D. In a curved surface adhesion test, a test piece obtained by backing a PSA sheet 10 mm wide and 90 mm long onto a 0.5 mm-thick aluminum sheet is bent by being wrapped, for 10 seconds, around a cylinder having a diameter of 40 mm, with the aluminum sheet facing inwards. Thereupon, the test piece is pressure-bonded to a polypropylene plate and is held in a condition at a temperature of 23°C and relative humidity of 50% for 24 hours, and then in a condition at 70°C for 2 hours. The resulting lift distance of an end of the test piece off the surface of the polypropylene plate is then measured. A double-sided PSA sheet having such features exhibits good curved surface adhesion, and hence can be used preferably for bonding of parts having non-planar surface shapes, for instance curved surfaces.

In another preferred embodiment, the thickness (total sheet thickness excluding release liners) of the double-sided PSA sheet ranges from 100 µm to 250 µm, and the double-sided PSA sheet further satisfies the following characteristic.
E: the MD tensile strength and CD tensile strength are both equal to or greater than 15 N/10 mm. A double-sided PSA sheet having such features exhibits good curved surface adhesion, and hence can be used preferably for bonding of parts having non-planar surface shapes, for instance curved surfaces. The double-sided PSA sheet has moreover appropriate strength, and hence is not prone to breaking or leaving adhesive residue when removed from an adherend. The double-sided PSA sheet can thus be appropriately used also for parts to be recycled.

In yet another preferred embodiment, the double-sided PSA sheet satisfies the following characteristic.
F: the total amount (TVOC) of volatile organic compounds (VOCs) emitted by the double-sided PSA sheet when held at 80°C for 30 minutes is no greater than 1000 µg per 1 g of the double-sided PSA sheet (release liners excluded). A double-sided PSA sheet having lower TVOC is preferable in that it poses less of a burden on the natural environment and the working condition. The double-sided PSA sheet can be appropriately used for bonding or fixing of members, such as articles or the like that are mass-manufactured, that are used in closed spaces, for instance interior materials in automobiles and homes, that have to operate at high temperature, or that are heated during use.

The double-sided PSA sheet disclosed herein has the above good PSA characteristics (for instance, adhesive strength, curved surface adhesion), and hence can be preferably used in various applications, as in the case of ordinary double-sided PSA sheets (for instance, semi-permanent fixing of adherends such as parts or the like). Also, the sheet can be removed from adherends without tearing and without leaving adhesive residue, as described above. Therefore, the double-sided PSA sheet can be appropriately used, in particular, affixed to parts to be recycled (typically, for fixing parts that are intended for recycling).

### BRIEF DESCRIPTION OF THE DRAWINGS

Fig. 1 is a cross-sectional diagram illustrating schematically a typical configuration example of a double-sided PSA sheet; and
Fig. 2 is a cross-sectional diagram illustrating schematically another typical configuration example of a double-sided PSA sheet.

### DETAILED DESCRIPTION OF THE INVENTION

Preferred embodiments of the present invention are explained below. Any features other than the features specifically set forth in the present description and which may be necessary for carrying out the present invention can be regarded as design matter for a person skilled in the art on the basis of known techniques in the technical field in question. The present invention can be carried out on the basis of the disclosure of the present description and common technical knowledge in the technical field in question.

The double-sided PSA sheet disclosed herein is provided with a substrate that comprises a nonwoven fabric. The nonwoven fabric comprises hemp (typically, Manila hemp) as a constituent fiber. The nonwoven fabric may comprise one, two or more types of other fibers, in amounts that do not impair the strength of the nonwoven fabric. Examples of these other fibers include, for instance, cellulose fibers such as wood fibers (for instance, wood pulp), rayon, acetate or the like; synthetic fibers such as polyester fibers, polyvinyl alcohol (PVA), polyamide fibers, polyolefin fibers, polyurethane fibers or the like. As used herein, the term "nonwoven fabric" denotes conceptually a nonwoven fabric for PSA sheets that is used mainly in the field of PSA tapes and other PSA sheets. Typically, "nonwoven fabric" denotes a nonwoven fabric (so-called "paper") manufactured using ordinary papermaking machines. The hemp content in the nonwoven fabric is equal to or greater than 90%, preferably equal to or greater than 95%. In particular, there is preferably used a nonwoven fabric that comprises substantially only hemp.

The bulk density of the nonwoven fabric ranges from about 0.35 to 0.60 g/cm³ (for instance, from about 0.35 to 0.55 g/cm³). If the bulk density is too much greater than the above range, it is difficult to impregnate thoroughly the nonwoven fabric with the PSA. This results in lower PSA performance in terms of, for instance, curved surface adhesion, and makes interlaminar fracture likelier to occur during removal. A bulk density too much lower than the above range results in insufficient strength and makes the sheet likelier to be torn during removal. The nonwoven fabric used has a grammage ranging from about 20 g/m² to 30 g/m² and a thickness ranging from about 35 µm to 85 µm. Grammage and thickness are appropriately selected so as to fall within the above ranges, and in such a manner that the bulk density, resulting from dividing the grammage by the thickness, falls within the above bulk density range. The MD tensile strength of the nonwoven fabric is preferably equal to or greater than about 20 N/15 mm, (more preferably, equal to or greater than about 25 N/15 mm). The CD tensile strength of the nonwoven fabric is preferably equal to or greater than about 15 N/15 mm, (more preferably, equal to or greater than about 18 N/15 mm). Preferably, the interlaminar strength of the nonwoven fabric is equal to or greater than about 5 N/20 mm. The interlaminar strength can be measured in accordance with the below-described method.

The PSA layer of the double-sided PSA sheet disclosed herein is formed from a water-dispersed PSA composition in which an acrylic polymer (PSA component) is dispersed in water. The acrylic polymer is obtained through polymerization of a monomer starting material that contains an alkyl (meth)acrylate having an alkyl group of 4 to 12 carbon atoms (hereafter, this carbon atom range is denoted also as C₄₋₁₂) in a proportion equal to or greater than 60 wt% (typically, 60 to 98 wt%, for instance 60 to 90 wt%) of the entire monomer component.

The double-sided PSA sheet of the present invention further satisfies characteristic A: the average value of the SUS adhesive strength of both PSA faces is equal to or greater than 11 N/20 mm; and satisfies characteristic B: the average values of the PP adhesive strength of both PSA faces is equal to or greater than 8.5 N/20 mm. For example, a PSA sheet that exhibits the above PSA characteristics can be obtained in an instance where a double-sided PSA sheet is manufactured by using a substrate in the form of a nonwoven fabric made of hemp having a grammage of about 25 g/m² a thickness of about 50 µm, on each face of which there is provided a PSA layer having a thickness of about 60 µm formed from the above-described PSA composition. The SUS and PP adhesive strength can be measured in accordance with the below-described methods.

As regards characteristic A, the SUS adhesive strength of both PSA faces is preferably equal to or greater than 11 N/20 mm for each face. Preferably, the average value of both PSA faces is equal to or greater than 13 N/20 mm. More preferably, the SUS adhesive strength of each PSA face is equal to or greater than 13 N/20 mm.

As regards characteristic B, the PP adhesive strength of both PSA faces is preferably equal to or greater than 8.5 N/20 mm for each face. Preferably, the average value of both PSA faces is equal to or greater than 9 N/20 mm. More preferably, the PP adhesive strength of each PSA face is equal to or greater than 9 N/20 mm.

The upper limit values of SUS adhesive strength and PP adhesive strength are not particularly limited, but are ordinarily of about 18 N/20 mm and about and 16 N/20 mm, respectively, from the viewpoint of increasing removability from adherends.

Examples of an alkyl (meth)acrylate having the above C₄₋₁₂ alkyl group include, for instance, butyl (meth)acrylate, isobutyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate or the like. Preferred examples among alkyl (meth)acrylates are, for instance, butyl (meth)acrylate and 2-ethylhexyl (meth)acrylate.

In addition to the C₄₋₁₂ alkyl (meth)acrylate, as a main monomer (herein, monomer that takes up 60 wt% or more of the entire monomer component), the monomer starting material may contain other monomers (arbitrary monomers) as arbitrary components. The arbitrary monomers may be one, two or more types selected from among various monomers that are copolymerizable with the alkyl (meth)acrylate that is used. For instance, there can be used an ethylenically unsaturated monomer (functional group-containing monomer) having one, two or more functional groups selected from among carboxyl groups, hydroxyl groups, amino groups, amide groups, epoxy groups, alkoxysilyl groups and the like. Preferably used among the foregoing are acrylic acid and/or methacrylic acid. As the functional group-containing monomer there can be preferably used acrylic acid and /or methacrylic acid, and also a (meth)acrylate having an alkoxysilyl group. Examples of such a (meth)acrylate include, for instance, 3-(meth)acryloxypropyl trimethoxysilane, 3-(meth)acryloxypropyl triethoxysilane, 3-(meth)acryloxypropyl methyldimethoxysilane, 3-(meth)acryloxypropyl methyldiethoxysilane and the like. The functional group-containing monomer is useful for introducing cross-linking points in the acrylic polymer. The type and content proportion (copolymerization proportion) of the above functional group-containing monomer can be appropriately set in accordance with, for instance, the type and amount of the cross-linking agents that are used, on the type of cross-linking reaction, and the desired degree of cross-linking (cross-linking density).

The water-dispersed PSA composition can be obtained by emulsion polymerization of a monomer starting material such as the one described above. The mode of emulsion polymerization is not particularly limited, and may involve polymerization carried out in the same manner as in known conventional ordinary emulsion polymerization methods, for instance in terms of monomer supply methods, polymerization conditions (polymerization temperature, polymerization time, polymerization pressure and so forth), and materials (polymerization initiators, surfactants and the like). For instance, the monomer supply method may be a batch feed process wherein all the monomer starting material is fed at once, a continuous feed (drip) process, or a split feed (drip) process. Part or the entirety of the monomer starting material may also be emulsified beforehand by being mixed with water, whereupon the resulting emulsion is supplied into the reaction vessel.

The polymerization temperature may be set to, for instance, about 20 to 100°C (typically, 40 to 80°C). The polymerization initiator may be, although not limited thereto, an azo initiator, a peroxide initiator, or a redox initiator that combines a peroxide and a reducing agent.

Examples of azo initiators include, for instance, 2,2'-azobis[N-(2-carboxyethyl)-2-methyl propionamidine]hydrate; 2,2'-azobisisobutyronitrile, 2,2'-azobis(2-methylpropionamidine)disulfate, 2,2-azobis(2-amidinopropane)dihydrochloride, 2,2'-azobis[2-(5-methyl-2-imidazolin-2-yl)propane]dihydrochloride, and 2,2'-azobis(N,N'-dimethyleneisobutylamidine)dihydrochloride.

Examples of peroxide initiators include, for instance, persulfates such as potassium persulfate, ammonium persulfate; as well as benzoyl peroxide, t-butyl hydroperoxide, hydrogen peroxide and the like.

Examples of redox initiators include, for instance, a combination of a persulfate and sodium hydrogen sulfite or a combination of a peroxide and sodium ascorbate.

The amount of polymerization initiator that is used can be suitably selected in accordance with, for instance, the type of the initiator and the monomers (composition of the monomer starting material), but ordinarily can be appropriately selected from within a range of about 0.01 to 1 parts by weight relative to 100 parts by weight of the monomer starting material. As the method of supplying the polymerization initiator there can be used, for instance, a batch process wherein essentially all of the polymerization initiator to be used is charged into the reaction vessel (typically, an aqueous solution of the polymerization initiator is prepared in the reaction vessel) before the monomer starting material starts being supplied, a continuous process, or a semi-batch process. A batch process, for example, can be preferably used from the standpoint of, for instance, ease of the polymerization operation and ease of process step control. The polymerization temperature may be set to, for instance, about 20 to 100°C (typically, 40 to 80°C).

The emulsifier (surfactant) used may be, for instance, an anionic emulsifier or a nonionic emulsifier. Examples of anionic emulsifiers include, for instance, sodium lauryl sulfate, ammonium lauryl sulfate, sodium dodecylbenzene sulfonate, sodium polyoxyethylene alkyl ether sulfates, ammonium polyoxyethylene alkylphenyl ether sulfates, sodium polyoxyethylene alkylphenyl ether sulfates or the like. Examples of nonionic emulsifiers include, for instance polyoxyethylene alkyl ethers, polyoxyethylene alkylphenyl ethers and the like. There may also be used a radical polymerizable emulsifier (reactive emulsifier) having a structure wherein a radical polymerizable group (propenyl group or the like) is inserted into one of the above anionic or nonionic emulsifiers. The above emulsifiers can be used as a single type alone or in suitable combinations of two or more types. The amount of emulsifier to be used (nonvolatile basis) can be, for example, about 0.2 to 10 parts by weight (preferably, about 0.5 to 5 parts by weight) relative to 100 parts by weight of monomer starting material.

A known chain transfer agent (that can also be interpreted as a molecular weight regulator or polymerization degree regulator) can be used in the above polymerization process (typically emulsion polymerization), as the case may require. The chain transfer agent can be one, two or more types selected from mercaptans such as dodecyl mercaptan (dodecanethiol), glycidyl mercaptan, 2-mercapto ethanol or the like, preferably dodecanethiol. The amount of chain transfer agent to be used may range, for example, from about 0.001 to 0.5 parts by weight relative to 100 parts by weight of monomer starting material, or from about 0.02 to 0.05 parts by weight.

Although not particularly limited thereto, emulsion polymerization can be carried out in such a manner that the weight proportion of the residual insoluble fraction (gel fraction) upon extraction of the obtained acrylic polymer with ethyl acetate ranges from 0 wt% to less than about 70 wt%. Polymerization can be performed in such a manner that the weight-average molecular weight (Mw) of the soluble fraction of the acrylic polymer extracted with tetrahydrofuran (THF) ranges for instance from about 500,000 to 1,000,000, in terms of equivalent polystyrene standard.

An ordinary cross-linking agent may be blended, as the case may require, into the water-dispersed PSA composition that is used to form the PSA layer in the double-sided PSA sheet disclosed herein. The cross-linking agent may be for instance selected from among carbodiimide cross-linking agents, hydrazine cross-linking agents, epoxy cross-linking agents isocyanate cross-linking agents, oxazoline cross-linking agents, aziridine cross-linking agents, metal chelate cross-linking agents and silane coupling agents. The cross-linking agents may be used singly or in combinations of two or more. Although not particularly limited thereto, the amount of cross-linking agent used can be set in such a manner that the weight proportion of the residual insoluble fraction (gel fraction) upon extraction of the PSA formed from the above composition (i.e. PSA after cross-linking by the above-described cross-linking agent) with ethyl acetate, ranges from about 15 to 70 wt% (for instance, from about 30 to 55 wt%).

A tackifier may also be blended into the PSA composition. As the tackifier there may be used one, two or more types of various tackifying resins such as, for instance, rosin resins, rosin derivative resins, petroleum resins, terpene resins, phenol resins, ketone resins and the like.

The tackifying resin can be preferably used as a tackifier in the form of an aqueous emulsion in which the resin is dispersed in water. For instance, an aqueous emulsion of the acrylic polymer and an aqueous emulsion of the tackifying resin are mixed together with to prepare easily thereby a PSA composition containing desired proportions of the foregoing components. At least the tackifying resin emulsion that is used contains preferably virtually no aromatic hydrocarbon solvent (more preferably, contains substantially no aromatic hydrocarbon solvent and no other organic solvent). A PSA sheet with an even lower TVOC can be achieved thereby.

Commercially available products that can be preferably used as the tackifier include, but not limited thereto, "Super Ester KE-802", "Super Ester NS-100H", "Super Ester E-865", "Super Ester E-865NT", "Super Ester E-650", "Super Ester E-786-60", "Tamanol E-100", "Tamanol E-200", "Tamanol 803L", "Pensel D-160," and "Pensel KK" from Arakawa Chemical Industries; "YS Polyster S," YS Polyster T," and "Mightyace G" from Yasuhara Chemical; and "Hariester SK-501NS", "Hariester SK-385NS", "Hariester SK-370N", "Hariester SK-218NS", "Hariester SK-323NS", "Hariester SK-350NS" from Harima Chemicals.

The blending proportion of tackifier can be set to be, for instance, no greater than about 50 parts by weight relative to 100 parts by weight of acrylic polymer, on nonvolatile (solids) basis. Ordinarily, setting the above blending proportion to be no greater than about 30 parts by weight is appropriate. The lower limit of tackifier content is not particularly limited, but good effects can be usually obtained when the tackifier content is about 1 parts by weight or more with respect to 100 parts by weight of polymer content.

The PSA composition disclosed can contain an acid or base (aqueous ammonia or the like) used to adjust, for instance, the pH of the composition. Examples of other arbitrary components that can be included in the composition include various additives that are generally used in the field of aqueous PSA compositions, for instance, viscosity regulators such as thickeners, leveling agents, plasticizers, bulking agents, pigments, dyes or other colorants, stabilizers, preservatives and anti-aging agents. Known wetting enhancers can be added to the PSA composition in order to increase the impregnation ability of the PSA into the nonwoven fabric substrate. Adding such wetting enhancers is particularly effective when the PSA layer is formed on at least one of the faces of the nonwoven fabric substrate by a direct method. The above various additives are well known and can be used in accordance with ordinary methods, and thus an explanation thereof will be omitted herein as they are not a particular characterizing feature of the present invention.

The double-sided PSA sheet disclosed herein allows realizing a double-sided PSA sheet having PSA layers formed from a water-dispersed PSA composition (i.e. a double-sided PSA sheet manufactured using a water-dispersed PSA composition) that has excellent PSA characteristics and releasing ability. Also, the double-sided PSA sheet can be removed without tearing and without leaving adhesive residue, and constitutes hence a double-sided PSA sheet that can be preferably used in parts to be recycled.

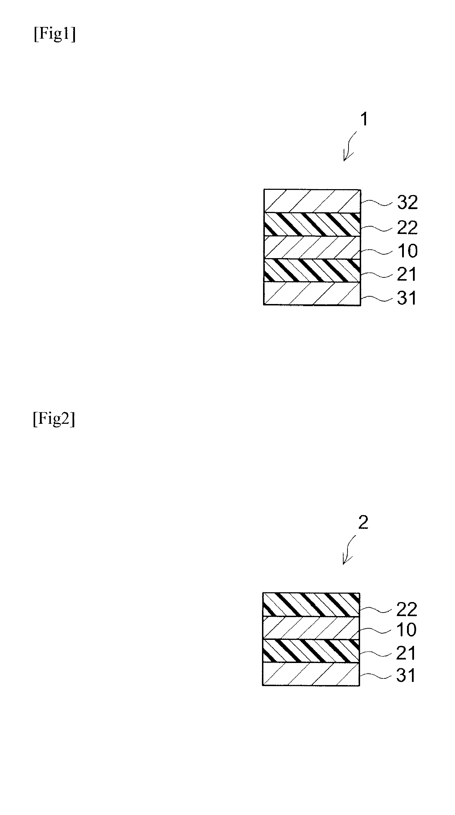

The double-sided PSA sheet (which may be an elongate sheet in the form of a tape or the like) according to the present invention has for instance the cross-sectional structure schematically illustrated in Fig. 1 or Fig. 2. The double-sided PSA sheet 1 illustrated in Fig. 1 has a nonwoven fabric substrate 10 and PSA layers 21, 22 respectively provided on both faces of the nonwoven fabric substrate 10. The PSA layers 21, 22 are each protected by a respective release liner 31, 32 on the side of each PSA layer that constitutes a release face. The double-sided PSA sheet 2 illustrated in Fig. 2 has a nonwoven fabric substrate 10 and PSA layers 21, 22 respectively provided on both faces of the nonwoven fabric substrate 10. The PSA layer 21 is protected by a first release face of a release liner 31, both faces of which constitute release faces. This type of PSA sheet 2 has a structure in which the PSA sheet 2 is wound to cause the PSA layer 22 to abut the second release face of the release liner 31, whereby the PSA layer 22 can be also protected by the release liner 31. For easier comprehension, the interfaces between the nonwoven fabric substrate 10 and the PSA layers 21, 22 have been depicted as straight lines in Fig. 1 and Fig. 2, but in actuality at least part of each PSA layer 21, 22 is impregnated into the nonwoven fabric substrate 10.

The method for providing the PSA layers on both faces of the nonwoven fabric substrate is not particularly limited. Ordinarily, PSA layers are preferably provided on each respective face in accordance with either method selected from among (1) a method (hereafter, "transfer method") in which a PSA composition is applied to (typically, coated onto) a release liner and is dried, to form a PSA layer on the release liner, whereupon the PSA layer with the liner is to the substrate through affixing (stacking) to the latter; and (2) a method in which the PSA composition is directly applied to (typically, coated onto) the substrate, and is dried (hereafter, "direct coating method" or "direct method"). For instance, the double-sided PSA sheet may be manufactured by using a transfer method on both faces of the substrate (transfer-transfer method). Alternatively, the double-sided PSA sheet may be manufactured by using the transfer method on a first face of the substrate (typically, the face on which a PSA layer is initially provided), and using the direct coating method on the second face (transfer-direct method). The transfer-direct method can be preferably used from the viewpoint of achieving more easily a double-sided PSA sheet (for instance, a high-tensile strength PSA sheet) that is appropriate for affixing to parts to be recycled (for instance, fixing of recyclable parts). In the manufacture of a double-sided PSA sheet by the transfer-direct method, the viscosity of the PSA composition used in the direct method may be lower than the viscosity of the PSA composition used in the transfer method. This allows enhancing the impregnation ability and the PSA characteristics of the PSA layers onto the substrate.

The PSA composition can be applied using a conventional coater, for example, a rotogravure roll coater, a reverse roll coater, a case roll coater, a deep roll coater, a bar coater, a knife coater, a sprayed coater and the like.

The composition is preferably dried by heating, from the standpoint of increasing the efficiency with which the aqueous component and the volatile component, for instance residual monomers, are removed from the PSA composition, and from the viewpoint of promoting cross-linking reactions and the like. Although not particularly limited thereto, the drying temperature can be set, for instance, to about 40°C to 140°C (preferably 60°C to 120°C). The drying time can be set, for instance, from about 1 minute to 5 minutes. The cross-linking reaction can be further promoted by aging (curing) the dried PSA layer under suitable conditions (for instance, in a condition at about 40°C or higher (typically about 40°C to 70°C)).

In addition to characteristics A, B above, the double-sided PSA sheet disclosed herein preferably further satisfies at least one (preferably, both) from among characteristic C: the holding time in a holding power test at 40°C is 1 hour or longer for both PSA faces; and characteristic D: the lift distance of an end of the test piece is no greater than about 10 mm in the above-described curved surface adhesion test. As regards characteristic C, in the below-described holding power test at 40°C, a test piece is held in a condition at 40°C, and a load of 500 g is placed on one free end of the test piece. After 1 hour in that state there is measured the displacement distance from the initial position of the test piece (difference between initial position and position after one hour). The displacement distance is preferably no greater than about 2 mm (more preferably, no greater than about 1.5 mm).

As regards characteristic D, the lift distance is more preferably no greater than about 7 mm, and yet more preferably no greater than about 4 mm.

The total thickness of the double-sided PSA sheet disclosed herein, including the nonwoven fabric substrate and both PSA layers (but excluding the release liners), ranges preferably from about 100 µm to 250 µm (for instance, from about 150 µm to 200 µm). In addition to characteristics A to B above, the double-sided PSA sheet further satisfies characteristic E: the tensile strength of the double-sided PSA sheet (release liners excluded) in both the MD direction and the CD direction is equal to or greater than about 15 N/10 mm. In characteristic E above, the tensile strength in the MD direction is more preferably equal to or greater than about 20 N/10 mm, and yet more preferably equal to or greater than about 25 N/10 mm.

In order to obtain a double-sided PSA sheet that satisfies the above tensile strength there is preferably used, for instance, a substrate in the form of a nonwoven fabric having high tensile strength (for instance, a nonwoven fabric having the above-mentioned MD and CD tensile strengths). In order to obtain a double-sided PSA sheet having yet higher tensile strength, the PSA layers are preferably better impregnated into the substrate. As a way of achieving better impregnation of the PSA layers into the substrate, the following procedures can be carried out singly or in appropriate combinations: using the direct coating method for providing a PSA layer on at least one face of the substrate; applying a compressive force in the thickness direction after the PSA layer is provided on the substrate (through pressing using a pressing jig, for instance, at a temperature of 40°C or higher (typically, from 40 to 100°C) and preferably 50°C or higher (typically, from 50 to 90°C), such a process being able to be preferably carried out using a laminator set to the above temperature); and after having provided the PSA layers on the substrate, subjecting the resulting to ageing by holding it in a condition at a temperature of 40°C or higher (typically, from 40 to 70°C) for, for example, about 1 to 7 days.

In a preferred embodiment of the double-sided PSA sheet disclosed herein, the TVOC released by the double-sided PSA sheet when held at 80°C for 30 minutes can be 1000 µg or less per 1 g of double-sided PSA sheet (release liners excluded) (hereafter, notated also as "1000 µg/g" or the like). A double-sided PSA sheet that satisfies the above characteristic (characteristic F) can be preferably used in applications that demand a significant reduction in VOCs, for example, home appliances and office automation equipment used indoors, or automobiles or the like, that constitute enclosed spaces. More preferably, the TVOC is 500 µg/g or less, and yet more preferably 300 µg/g or less. TVOC can be measured in accordance with the method set forth in the examples below.

### EXAMPLES

Various examples relating to the present invention are explained below, but the present invention is not meant in any way to be limited to the features described in the examples. Unless otherwise stated, the term "parts" and "%" in the explanation refer to parts and % by weight.

### Example 1

A reaction vessel equipped with stirrer, thermometer, reflux condenser, dripping apparatus, and nitrogen inlet port was charged with 60 parts of distilled water and 0.1 parts of an emulsifier (sodium polyoxyethylene alkyl ether sulfate, trade name "Latemul E-118B", by Kao), with stirring for 1 hour or longer at 60°C, under nitrogen gas flow. Then 0.1 part of 2,2'-azobis[N-(2-carboxyethyl)-2-methylpropionamidine]hydrate (trade name "VA-057", by Wako Pure Chemical Industries) was added as a polymerization initiator.

As the monomer starting material there was prepared an emulsion of 85 parts of 2-ethylhexyl acrylate, 13 parts of methyl acrylate, 1.5 parts of acrylic acid, 0.5 parts of methacrylic acid, 0.02 parts of 3-methacryloxypropyltrimethoxysilane (trade name "KBM-503", by Shin-Etsu Chemical), 0.033 parts of dodecanethiol (chain transfer agent), and 1.9 parts of the above emulsifier, in 28.6 parts of distilled water.

The resulting emulsion of monomer starting material was dripped gradually, over 4 hours, onto the above reaction solution held at 60°C, to carry out emulsion polymerization. Once dripping of the monomer starting material was over, the whole was stirred for further 3 hours at 60°C, and then heating was discontinued. Next, 0.75 parts of 10% aqueous hydrogen peroxide were added relative to 100 parts of monomers, with stirring for 5 minutes, and then 0.5 parts of ascorbic acid were further added, to carry out a redox treatment. After cooling to room temperature, the pH was adjusted to pH 6.5 through addition of 10% aqueous ammonia, to yield an acrylic polymer emulsion having a nonvolatile content (NV) of about 51 %. The average particle size of the emulsion was about 200 nm.

Then 20 parts, on solids basis, of a water-dispersed rosin resin (trade name "Super ester KE-802", by Arakawa Chemical industries) and 10 parts of a water-dispersed rosin resin (trade name "Super ester NS-100H", by Arakawa Chemical industries) were added with respect to 100 parts of the acrylic polymer comprised in the above acrylic polymer emulsion. The pH was adjusted to 7.2 using 10% aqueous ammonia as a pH adjuster, and the viscosity was adjusted to 8 Pa·s using polyacrylic acid as a thickener, to yield a water-dispersed acrylic PSA composition according to the present example. The viscosity was measured using a BH-type viscometer, with rotor No. 3, revolutions 20 rpm, liquid temperature 30°C, and measurement time 1 minute.

A double-sided PSA sheet was manufactured in accordance with the procedure below using the obtained PSA composition. The release liner used was trade name "SLB-80WD(V2)" (by Kaito Chemical Industry) treated on both sides with a silicone release agent. A first PSA layer having a thickness of about 60 µm was formed by coating the above PSA composition onto a first face of a first release liner sheet, followed by drying at 100°C for 2 minutes. A first PSA layer was provided on a nonwoven fabric substrate by overlaying the release liner having the PSA layer onto a first face of the substrate. A second PSA layer was formed through direct coating of the PSA composition onto the second face of the substrate, followed by drying at 100°C for 2 minutes, to a sheet total thickness of 170 µm after drying. A second release liner sheet was overlaid on the second PSA layer. The obtained laminate (release liner (first sheet) /first PSA layer /nonwoven fabric substrate /second PSA layer /release liner (second sheet)) was held for 24 hours in an oven at 50°C, to yield a double-sided PSA sheet.

The nonwoven fabric substrate used was a nonwoven fabric A (Manila hemp 100%, bulk density 0.48 g/cm³, grammage 23.3 g/m², thickness 49 µm, MD tensile strength 42.2 N/15 mm, CD tensile strength 33.3 N/15 mm).

### Example 2

A double-sided PSA sheet was obtained in the same way as in Example 1, but using herein a nonwoven fabric B (Manila hemp 100%, bulk density 0.43 g/cm³, grammage 22.9 g/m², thickness 53 µm, MD tensile strength 41.2 N/15 mm, CD tensile strength 31.4 N/15 mm) instead of the nonwoven fabric A.

### Example 3

A double-sided PSA sheet was obtained in the same way as in Example 1, but using herein a nonwoven fabric C (Manila hemp 100%, bulk density 0.508 g/cm³, grammage 25.4 g/m², thickness 50 µm, MD tensile strength 38.6 N/15 mm, CD tensile strength 26.8 N/15 5 mm) instead of the nonwoven fabric A.

### Example 4

A double-sided PSA sheet was obtained in the same way as in Example 1, but using herein a nonwoven fabric D (Manila hemp 100%, bulk density 0.45 g/cm³, grammage 24.7 g/m², thickness 55 µm, MD tensile strength 30.4 N/15 mm, CD tensile strength 18.7 N/15 mm) instead of the nonwoven fabric A.

### Example 5

A double-sided PSA sheet was obtained in the same way as in Example 1, but using herein a nonwoven fabric E (Manila hemp 100%, bulk density 0.35 g/cm³, grammage 24.4 g/m², thickness 69 µm, MD tensile strength 23.2 N/15 mm, CD tensile strength 16.5 N/15 mm) instead of the nonwoven fabric A.

### Example 6

A double-sided PSA sheet was obtained in the same way as in Example 1, but using herein a nonwoven fabric F (Manila hemp 70% and wood pulp 30%, bulk density 0.29 g/cm³, grammage 20.6 g/m², thickness 71 µm, MD tensile strength 13.2 N/15 mm, CD tensile strength 9.1 N/15 mm) instead of the nonwoven fabric A.

### Example 7

A double-sided PSA sheet was obtained in the same way as in Example 1, but using herein a nonwoven fabric G (polyester 100%, bulk density 0.65 g/cm³, grammage 24.0 g/m², thickness 37 µm, MD tensile strength 15.4 N/15 mm, CD tensile strength 13.5 N/15 mm) instead of the nonwoven fabric A.

### Example 8

A double-sided PSA sheet was obtained in the same way as in Example 1, but using herein a nonwoven fabric H (wood pulp 100%, bulk density 0.37 g/cm³, grammage 11.0 g/m², thickness 30 µm, MD tensile strength 8.8 N/15 mm, CD tensile strength 1.5 N/15 mm) instead of the nonwoven fabric A.

### Example 9

A double-sided PSA sheet was obtained in the same way as in Example 1, but using herein a nonwoven fabric I (Manila hemp 70% and rayon 30%, bulk density 0.30 g/cm³, grammage 23.6 g/m², thickness 80 µm, MD tensile strength 20.2 N/15 mm, CD tensile strength 13.3 N/15 mm) instead of the nonwoven fabric A.

The tensile strength of the nonwoven fabrics A to I was measured as follows. Test pieces were prepared by cutting each nonwoven fabric to strips 15 mm wide, in such a manner that the MD direction was the longitudinal direction of the strips. The test pieces were set in a tensile tester, trade name "Tensilon", by A&D, at a distance between chucks of 180 mm, in a condition at a temperature of 23°C and relative humidity (RH) of 50%. Each test piece was pulled in the MD direction at a pull rate of 50 mm/min, to measure the maximum tensile strength. As regards CD tensile strength, the maximum tensile strength was measured in the same way as the MD tensile strength, except that the test pieces were prepared so that the longitudinal direction thereof was the CD direction.

The interlaminar strength of the nonwoven fabrics was measured as follows. One face of a commercially available double-sided PSA tape (trade name "No. 5000NS", by Nitto Denko) was backed on a polyethylene terephthalate (PET) film substrate 25 µm thick, and was cut to a size 20 mm or more wide and 100 mm or more long, to prepare single-sided PSA tapes. The PSA faces of the single-sided PSA tapes were bonded to respective faces of the nonwoven fabrics, in such a manner that the MD direction of the nonwoven fabric corresponded to the longitudinal direction of the PSA tape. A 2 kg roller was passed over each face in a single back-and-forth pass to pressure-bond the whole into a laminate (single-sided PSA tape/nonwoven fabric/single-sided PSA tape). The laminate was cut to a size 20 mm wide and 100 mm long, to prepare test pieces. The test pieces were held at 60°C for 48 hours and then at 23°C for 1 hour. One end of the test pieces in the longitudinal direction thereof was peeled off to about 10 mm from the end, in a state of interlaminar fracture (nonwoven fabric split into two layers). The peeled ends were clamped on chucks of a tensile tester in a condition at a temperature of 23°C and RH 50%, in accordance with JIS Z 0237, and were pulled apart, in T-type peeling, at a pull rate of 300 mm/min, to measure peel strength (N/20 mm width).

The measurement results for MD tensile strength, CD tensile strength and interlaminar strength of the nonwoven fabrics A to I are summarized in Table 1 together with other characteristics of the nonwoven fabrics.

The measurements and evaluations below were performed on the PSA sheets obtained in Examples 1 to 9. The results are given in Table 2.

### Measurement of SUS adhesive strength

The first release liner sheet of each double-sided PSA sheet was peeled off, and the exposed first PSA face was affixed to a 25 µm-thick PET film as a backing. The backed PSA sheet was cut into test pieces 20 mm wide and 100 mm long.

The second release liner sheet of the test piece was peeled, and the exposed second PSA face was affixed to a SUS304 stainless steel plate, as an adherend, and was pressure-bonded thereto through a single back-and-forth pass of a 2 kg roller. The whole was held at 23°C for 30 minutes, and then the peel strength was measured through peeling at a peeling angle of 180° and a pull rate of 300 mm/min, in a condition at a temperature of 23°C and RH 50%, in accordance with JIS Z 0237, using the above-mentioned tensile tester. The measured peel strength was the SUS adhesive strength (N/20 mm width). The above measurement was carried out for each PSA face of the respective double-sided PSA sheets, and the average value of the faces was calculated.

### Measurement of PP adhesive strength

The PP adhesive strength (N/20 mm width) of both PSA faces was measured in the same way as in the measurement of SUS adhesive strength, but using herein a polypropylene (PP) plate (trade name "PP-N-AN", by Shin-Kobe Electric Machinery) as the adherend. The average value of peel strength of the faces was calculated.

### Measurement of holding power at 40°C

The holding power of the PSA faces of the respective double-sided PSA sheets was measured using a clip tester. The first release liner sheet of each double-sided PSA sheet was peeled off, and the exposed first PSA face was bonded to a 25 µm-thick PET film as a backing. The backed PSA sheet was cut into test pieces 10 mm wide. The second release liner sheet was peeled off the test piece, and the exposed second PSA face was affixed to a bakelite sheet, as an adherend, over a bonding area 10 mm wide and 20 mm long. The whole was held at 40°C for 30 minutes, and then the bakelite sheet was suspended and a load of 500 g was fitted to the free end of the test piece. In accordance with JIS Z 0237, the test piece was left to stand in this loaded state in a condition at 40°C for 1 hour. If the test piece dropped before 1 hour, the time elapsed until dropping was recorded. If the test piece did not drop but remained affixed to the adherend after a lapse of 1 hour, there was measured the displacement distance (mm) of the test piece between the initial affixing position and the position after the 1 hour lapse.

The above measurement was performed on both faces of each double-sided PSA sheet. The drop time or displacement distance given in Table 2 is the average value of both faces.

### Tensile strength measurement

Test pieces were prepared by cutting each double-sided PSA sheet to strips 10 mm wide, in such a manner that the MD direction was the longitudinal direction of the strips. The test pieces were set in the above-described tensile tester, in a condition a temperature of 23°C and RH of 50%, and a distance between chucks of 100 mm, and the maximum tensile strength was measured at a pull rate of 300 mm/min. The maximum tensile strength was the MD tensile strength (N/10 mm) of the double-sided PSA sheet.

The CD tensile strength (N/10 mm) of the double-sided PSA sheets was measured in the same way as in the MD tensile strength, but herein each double-sided PSA sheet was cut into test pieces in such a manner that the CD direction was the longitudinal direction of the test pieces.

### Evaluation of curved surface adhesion

Each double-sided PSA sheet was cut into a size 10 mm wide and 90 mm long, the first release liner sheet was peeled and the exposed first PSA face was affixed to an aluminum sheet (thickness 0.5 mm) cut to the same size, as a backing, to prepare a test piece. The test piece was held in a condition at 23°C, RH 50% for 1 day, and then was wrapped around a cylinder having a diameter of 40 mm (with the aluminum piece on the inside). The test piece was held against the cylinder for about 10 seconds, to bend thereby the test piece into an arc shape. The second release liner sheet of the test piece was then peeled off, and the exposed second PSA face was pressure bonded to a PP plate (200 mm x 300 mm, thickness 2 mm) using a laminator. The resulting laminate was held for 24 hours in a condition at 23°C, RH 50%, and then at 70°C for 2 hours, after which there was measured the distance (mm) by which the end of the test piece had lifted off the PP plate surface.

### Removability evaluation

The first release liner sheet was peeled off each double-sided PSA sheet, and the exposed first PSA face was affixed to a nonwoven fabric adherend (trade name "Vi-Black DS-25NK", by Japan Vilene), as a backing. The whole was pressure-bonded using a hand roller, and was cut into test pieces 20 mm wide and 100 mm long. The second release liner sheet of the test piece was then peeled off, and the exposed second PSA face was affixed to a 2 mm-thick acrylonitrile-butadiene-styrene copolymer resin plate (ABS plate, trade name "ABS-N-WN", by Shin-Kobe Electric Machinery), as an adherend. The whole was pressure-bonded through a single back-and-forth pass of a 2 kg roller. The test pieces were held at 70°C for 14 days, then at 60°C for 500 hours, and then at 23°C for 24 hours. In a condition at a temperature of 23°C and RH 50%, the test pieces were peeled off from the adherend (ABS plate) at a peeling angle of 180° and a pull rate of 300 mm/min, using a tensile tester. The state of the PSA sheet and the adherend after peeling was observed, and the removability upon low-rate peeling was evaluated in accordance with the below two grades.

Good: peeling without sheet tearing and without adhesive residue on adherend.

Poor: defective peeling, with sheet tearing and/or adhesive residue on adherend.

Removability upon high-rate peeling was assessed also on test pieces manufactured in the same way, in accordance with the two ratings above, and under the same conditions as above, but now with a pull rate of 30 m/min.

### TVOC measurement test

Each double-sided PSA sheet was cut into a size 10 mm wide and 50 mm long. The first release liner sheet was peeled off the test piece, and the exposed first PSA face was affixed to aluminum foil, as a backing. The second release liner sheet of the test piece was then peeled off, to expose the second PSA layer. The test piece was placed in a vial (20 mL) and the vial was sealed. Next, the vial was heated for 30 min at 80°C in a headspace sampler (HSS). A 1 mL gas sample was sampled out of the vial at the same temperature, and was injected into a gas chromatograph (GC) for analysis. The amount of the various gases generated by the test piece was determined as an amount in terms of n-decane. The sum total of the gas amounts was the TVOC value. The amount in terms of n-decane was worked out on the basis of n-decane calibration curves prepared beforehand, and taking the detected strength of the emitted gas, obtained by GC/mass spectrometry, as the detected strength of n-decane. The HSS and GC settings were as follows.

### HSS: Agilent Technologies model 7694

Pressurization time: 0.12 min
Loop fill time: 0.12 min
Loop equilibration time: 0.05 min
Injection time: 3 min
Sample loop temperature: 160°C
Transfer line temperature: 200°C

### GC: Agilent Technologies model 6890

Column: J&W Capillary column, trade name "DB-ffAP", by GL Sciences, (inner diameter 0.533 mm x length 30 m, film thickness 1.0 µm)
Column temperature: 250°C (the temperature was raised from 40°C to 90°C at a rate of 10°C/min, then to 250°C at a rate of 10°C/min, and was held at 250°C for 2 min)
Column pressure: 24.3 kPa (constant flow mode)
Carrier gas: Helium (5.0 mL/min)
Injection port: Split (split ratio 12:1)
Injection port temperature: 250°C
Detector: FID
Detection temperature: 250°C

**Table 1**

| Example | 1 | 2 | 3 | 4 | 5 | 6 | 7 | 8 | 9 |
|---|---|---|---|---|---|---|---|---|---|
| Substrate | | | | | | | | | |
| Type | A | B | C | D | E | F | G | H | I |
| Fiber composition | Hemp | Hemp | Hemp | Hemp | Hemp | Hemp and Pulp | PE | Pulp | Hemp and Rayon |
| Bulk density (g/cm³) | 0.48 | 0.43 | 0.51 | 0.45 | 0.35 | 0.29 | 0.65 | 0.37 | 0.30 |
| Grammage (g/m²) | 23.3 | 22.9 | 25.4 | 24.7 | 24.4 | 20.6 | 24.0 | 11.0 | 23.6 |
| Thickness (µm) | 49 | 53 | 50 | 55 | 69 | 71 | 37 | 30 | 80 |
| Tensile strength (N/15 mm) | | | | | | | | | |
| MD | 42.2 | 41.2 | 38.6 | 30.4 | 23.2 | 13.2 | 15.4 | 8.8 | 20.2 |
| CD | 33.3 | 31.4 | 26.8 | 18.7 | 16.5 | 9.1 | 13.5 | 1.5 | 13.3 |
| Interlaminar strength (N/20 mm) | 8.0 | 10.2 | 13.0 | 6.0 | 5.5 | 3.0 | 10.0 | 4.0 | 3.5 |

**Table 2**

| Example | 1 | 2 | 3 | 4 | 5 | 6 | 7 | 8 | 9 |
|---|---|---|---|---|---|---|---|---|---|
| PSA sheet | | | | | | | | | |
| Thickness (µm) | 167 | 164 | 176 | 175 | 161 | 149 | 174 | 156 | 155 |
| Peel strength (N/20 mm) | | | | | | | | | |
| SUS | 15.0 | 14.2 | 13.8 | 13.5 | 13.2 | 10.5 | 13.1 | 12.1 | 13.6 |
| PP | 9.8 | 9.8 | 9.5 | 10.0 | 11.8 | 10.1 | 9.8 | 11.8 | 8.9 |
| Holding power at 40°C (mm) | 1.1 | 1.1 | 0.7 | 0.6 | 0.5 | 0.8 | Dropped at 45 min | 1.0 | 0.6 |
| Curved surface adhesion (mm) | 2.1 | 2.0 | 1.5 | 3.0 | 5.0 | 8.0 | 1.3 | 2.4 | 8.0 |
| Tensile strength (N/10 mm) | | | | | | | | | |
| MD | 28.9 | 29.2 | 37.8 | 28.7 | 21.3 | 13.4 | 26.9 | 6.5 | 14.3 |
| CD | 23.3 | 23.1 | 23.5 | 18.0 | 15.8 | 11.3 | 13.8 | 3.8 | 12.3 |
| Removability | | | | | | | | | |
| 300 mm/min | G | G | G | G | G | G | P (Residue) | P (Tear) | P (Residue) |
| 30 m/min | G | G | G | G | G | P (Tear) | P (Residue) | P (Tear) | P (Tear) |
| VOC emission (µg/g) | 95 | 87 | 130 | 125 | 131 | 198 | 130 | 133 | 130 |

| | | | | | | | | | |
|---|---|---|---|---|---|---|---|---|---|
| G: Good P: Poor Residue: adhesive residue Tear: sheet tearing | | | | | | | | | |

As Table 1 shows, the double-sided PSA sheets of Examples 1 to 5, in which the nonwoven fabric substrate used comprised substantially hemp and had a bulk density ranging from 0.35 to 0.60 g/cm³, exhibited a SUS adhesive strength (an average value of peel strength of both PSA faces) equal to or greater than 11 N/20 mm and a PP adhesive strength (an average value of peel strength of both PSA faces) equal to or greater than 8.5 N/20 mm, i.e. good PSA strength suitable both for metal parts and plastic parts. The double-sided PSA sheets of Examples 1 to 5, moreover, exhibited good removability, without sheet tearing or adhesive residue on the adherend, under both low-rate peeling (300 mm/min) and high-rate peeling (30 m/min). The double-sided PSA sheets of Examples 1 to 2, in which the bulk density ranged from 0.4 to 0.5 g/cm³, exhibited yet superior PSA strength and removability.

By contrast, the double-sided PSA sheets of both Examples 6 and 9, in which the hemp-containing nonwoven fabric had a bulk density lower than 0.35 g/cm³, exhibited insufficient removability. Specifically, the double-sided PSA sheet of Example 6 tore upon high-rate peeling, while the PSA sheet of Example 9 left adhesive residue during low-rate peeling, and tore upon high-rate peeling. The double-sided PSA sheet of Example 7, in which there was used a nonwoven fabric substrate containing no hemp, exhibited insufficient PSA strength and insufficient releasing ability, in that the test piece dropped before 1 hour in the holding power test at 40°C, and suffered from adhesive residue and tearing in the removability test. Similarly, the double-sided PSA sheet of Example 8, in which there was used a nonwoven fabric substrate containing no hemp, tore upon both low- and high-rate peeling, and exhibited poor removability.

## Claims

1. A pressure-sensitive adhesive sheet being a double-sided adhesive sheet, comprising: a nonwoven fabric as a substrate; and pressure-sensitive adhesive layers respectively provided on both faces of the substrate,
wherein said nonwoven fabric comprises hemp as a constituent fiber, and has a bulk density of 0.35 to 0.60 g/cm3,
wherein said nonwoven fabric has a grammage ranging from 20 g/m2 to 30 g/m2 and a thickness ranging from 35 µm to 85 µm
wherein the hemp content in the nonwoven fabric is equal to or greater than 90%,
said pressure-sensitive adhesive layers are formed from a pressure-sensitive adhesive composition in the form of an aqueous dispersion,
said composition contains an acrylic polymer obtained through emulsion polymerization of a monomer starting material that contains an alkyl (meth)acrylate having an alkyl group of 4 to 12 carbon atoms, in a proportion equal to or greater than 60 wt% of the entire monomer component, and
wherein said pressure-sensitive adhesive sheet satisfies both of the characteristics below:
A. an average value of peel strength of both pressure-sensitive adhesive faces to a stainless steel plate at 180° determined according to the method described herein is equal to or greater than 11 N/20 mm; and
B. an average value of peel strength of both pressure-sensitive adhesive faces to a polypropylene plate at 180° determined according to the method described herein is equal to or greater than 8.5 N/20 mm.

2. The pressure-sensitive adhesive sheet according to claim 1, wherein said nonwoven fabric has a tensile strength, measured in a machine direction according to the method described herein, equal to or greater than 20 N/15 mm, and a tensile strength, measured in a cross-machine direction according to the method described herein, equal to or greater than 15 N/15 mm.

3. The pressure-sensitive adhesive sheet according to any one of claims 1 or 2, wherein said nonwoven fabric has an interlaminar strength determined according to the method described herein equal to or greater than 5 N/20 mm.

4. The pressure-sensitive adhesive sheet according to any one of claims 1 to 3,
wherein said pressure-sensitive adhesive sheet further satisfies both of the characteristics below:
C. a holding time in a holding power test at 40°C according to the method described herein is 1 hour or longer at each face; and
D. in a curved surface adhesion test in which a test piece obtained by backing a pressure-sensitive adhesive sheet 10 mm wide and 90 mm long onto a 0.5 mm-thick aluminum sheet is bent by being wrapped, for 10 seconds, around a cylinder having a diameter of 40 mm, with the aluminum sheet facing inwards, and the test piece is pressure-bonded to a polypropylene plate and is held in a condition at a temperature of 23°C and relative humidity of 50% for 24 hours, and then in a condition at 70°C for 2 hours, a lift distance of an end of said test piece off the surface of said polypropylene plate is no greater than 10 mm.

5. The pressure-sensitive adhesive sheet according to any one of claims 1 to 4, wherein said pressure-sensitive adhesive sheet has a thickness ranging from 100 µm to 250 jum, and further satisfies the characteristic below:
E. the tensile strengths measured in the machine direction and cross-machine direction according to the method described herein are both equal to or greater than 15 N/10 mm.

6. The pressure-sensitive adhesive sheet according to any one of claims 1 to 5,
wherein the total amount of volatile organic compounds emitted by said pressure-sensitive adhesive sheet when held at 80°C for 30 minutes and measured according to the method described herein is no greater than 1000 µg per 1 g of pressure-sensitive adhesive sheet.

7. Use of the pressure-sensitive adhesive sheet according to any one of claims 1 to 5 for fixing a part to be recycled.

## Patentansprüche

1. Haftklebefolie, die eine doppelseitige Klebefolie ist, umfassend: ein Faservlies als ein Substrat; und Haftklebeschichten, die jeweils auf beide Seiten des Substrats aufgebracht sind,
wobei besagtes Faservlies Hanf als konstituierende Faser umfasst, und eine Raumdichte von 0,35 bis 0,60 g/cm³ besitzt,
wobei besagtes Faservlies eine Grammatur im Bereich von 20 g/m² bis 30 g/m² und eine Dicke im Bereich von 35 µm bis 85 µm besitzt,
wobei der Hanfanteil im Faservlies gleich oder höher als 90% ist,
wobei besagte Haftklebeschichten aus einer Haftkleberzusammensetzung in der Form einer wässrigen Dispersion gebildet sind,
wobei besagte Zusammensetzung ein Acrylpolymer enthält, erhalten durch Emulsionspolymerisation eines Monomerstartmaterials, das ein Alkyl(meth)acrylat, das eine Alkyl-gruppe von 4 bis 12 Kohlenstoffatomen besitzt, in einem Verhältnis von gleich oder größer als 60 Gewichts-% der Gesamtmonomerkomponente enthält, und
wobei besagte Haftklebefolie beide der unten stehenden Eigenschaften erfüllt:
A. einen Durchschnittswert an Abziehfestigkeit beider Haftklebeflächen in Bezug zu einer Edelstahlplatte bei 180°, bestimmt gemäß einem Verfahren wie hierin beschrieben, von gleich oder größer als 11 N/20 mm; und
B. einen Durchschnittswert an Abziehfestigkeit beider Haftklebeflächen in Bezug zu einer Polypropylenplatte bei 180°, bestimmt gemäß einem Verfahren wie hierin beschrieben, von gleich oder größer als 8,5 N/20 mm.

2. Haftklebefolie gemäß Anspruch 1, wobei besagtes Faservlies eine Zugfestigkeit, gemessen in Längsrichtung, gemäß dem Verfahren wie hierin beschrieben, von gleich oder größer als 20 N/15 mm, und eine Zugfestigkeit, gemessen in Querrichtung, gemäß dem Verfahren wie hierin beschrieben, von gleich oder größer als 15 N/15 mm besitzt.

3. Haftklebefolie gemäß einem der Ansprüche 1 oder 2, wobei besagtes Faservlies eine Spaltfestigkeit (interlaminar strength), bestimmt gemäß dem Verfahren wie hierin beschrieben, von gleich oder größer als 5 N/20 mm besitzt.

4. Haftklebefolie gemäß einem der Ansprüche 1 bis 3, wobei besagte Haftklebefolie zusätzlich beide der unten stehenden Eigenschaften erfüllt:
C. eine Haltezeit in einem Haltekrafttest bei 40° C, gemäß dem Verfahren wie hierin beschrieben, von 1 Stunde oder länger an jeder Seite; und
D. in einem Klebetest mit gekrümmter Oberfläche, bei dem ein Teststück, erhalten durch Unterschichten einer Haftklebefolie mit 10 mm Breite und 90 mm Länge mit einer 0,5 mm dicken Aluminiumfolie, gebogen wird durch Wickeln für 10 Sekunden um einen Zylinder, der einen Durchmesser von 40 mm besitzt, wobei die Aluminiumfolie nach innen zeigt, und wobei das Teststück an eine Polypropylenplatte mit Druck gebunden wird, und bei einer Temperatur von 23° C und einer relativen Feuchtigkeit von 50% für 24 Stunden gehalten wird, und dann bei 70° C für 2 Stunden, die Anhebedistanz an einem Ende von besagtem Teststück von der Oberfläche von besagter Polypropylenplatte nicht größer als 10 mm ist.

5. Haftklebefolie gemäß einem der Ansprüche 1 bis 4, wobei besagte Haftklebefolie eine Dicke im Bereich von 100 µm bis 250 µm besitzt, und zusätzlich die unten stehende Eigenschaft erfüllt:
E. die Zugfestigkeiten gemessen in Längsrichtung und Querrichtung, gemäß dem Verfahren wie hierin beschrieben, sind beide gleich oder größer als 15 N/10 mm.

6. Haftklebefolie gemäß einem der Ansprüche 1 bis 5, wobei die Gesamtmenge an flüchtigen organischen Verbindungen, die besagte Haftklebefolie emittiert, wenn sie bei 80°C für 30 Minuten gehalten wird, gemessen gemäß dem Verfahren wie hierin beschrieben, nicht größer als 1000 µg pro 1 g der Haftklebefolie ist.

7. Verwendung der Haftklebefolie gemäß einem der Ansprüche 1 bis 5 zum Befestigen eines zu recyclierenden Bauteils.

## Revendications

1. Feuille adhésive sensible à la pression qui est une feuille adhésive double face comprenant : un tissu non tissé agissant comme substrat et des couches adhésives sensibles à la pression prévues respectivement sur les deux faces du substrat,
dans laquelle ledit tissu non tissé comprend du chanvre comme fibre constitutive et présente une densité apparente de 0,35 à 0,60 g/cm³,
ledit tissu non tissé présentant un grammage allant de 20 g/m² à 30g/m² et une épaisseur allant de 35 µm à 85 µm
dans laquelle la teneur en chanvre dans le tissu non tissé est supérieure ou égale à 90 %,
lesdites couches adhésives sensibles à la pression sont formées à partir d'une composition adhésive sensible à la pression se trouvant sous la forme d'une dispersion aqueuse,
ladite composition contient un polymère acrylique obtenu par la polymérisation en émulsion d'une matière première monomère qui contient un (meth) acrylate d'alkyle comportant un groupe alkyle de 4 à 12 atomes de carbone dans une proportion supérieure ou égale à 60 % en poids du composant monomère entier, et
dans lequel ladite feuille adhésive sensible à la pression satisfait aux deux caractéristiques ci-dessous :
A. la valeur moyenne de résistance au pelage des deux faces adhésives sensibles à la pression à une plaque d'acier inoxydable à 180 °, déterminée en fonction du procédé décrit ici, est supérieure ou égale à 11 N / 20 mm, et
B. la valeur moyenne de résistance au pelage des deux faces adhésives sensibles à la pression à une plaque de polypropylène à 180 °, déterminée en fonction du procédé décrit ici, est supérieure ou égale à 8,5 N / 20 mm.

2. Feuille adhésive sensible à la pression selon la revendication 1, dans laquelle ledit tissu non tissé présente une résistance à la traction, mesurée dans la direction d'une machine conforme au procédé décrit ici, supérieure ou égale à 20 N / 15 mm, et une résistance à la traction, mesurée dans la direction croisée de la machine conforme au procédé décrit ici, supérieure ou égale à 15 N / 15 mm.

3. Feuille adhésive sensible à la pression selon l'une quelconque des revendications 1 ou 2, dans laquelle ledit tissu non tissé présente une résistance au clivage, déterminée en fonction du procédé décrit ici, supérieure ou égale à 5 N / 20 mm.

4. Feuille adhésive sensible à la pression selon l'une quelconque des revendications 1 à 3,
dans laquelle ladite feuille adhésive sensible à la pression satisfait de plus les deux caractéristiques ci-dessous :
C. le temps de maintien dans un test d'une puissance de maintien à 40 °C, en fonction du procédé décrit ici, est de 1 heure ou plus sur chaque face, et
D. dans un test d'adhérence sur une surface incurvée, dans lequel une pièce en test, obtenue en soutenant une feuille adhésive sensible à la pression de 10 mm de large par 90 mm de long par une feuille d'aluminium d'épaisseur 0,5 mm, est courbée en étant enroulée pendant 10 secondes autour d'un cylindre présentant un diamètre de 40 mm, la feuille d'aluminium faisant face vers l'intérieur, et la pièce en test est soudée par pression à une plaque de polypropylène et maintenue dans l'état à une température de 23 °C et une humidité relative de 50 % pendant 24 heures, puis dans un état à 70 °C pendant 2 heures, la distance d'élévation de l'extrémité de ladite pièce en test à distance de la surface de ladite plaque de polypropylène n'est pas supérieure à 10 mm.

5. Feuille adhésive sensible à la pression selon l'une quelconque des revendications 1 à 4, dans laquelle ladite feuille adhésive sensible à la pression présente une épaisseur allant de 100 µm à 250 µm et satisfait de plus à la caractéristique ci-dessous :
E. les résistances à la traction mesurées dans la direction de la machine et dans la direction croisée de la machine, en fonction du procédé décrit ici, sont toutes les deux supérieures ou égales à 15 N / 10 mm

6. Feuille adhésive sensible à la pression selon l'une quelconque des revendications 1 à 5,
dans laquelle la quantité totale de composés organiques volatils émis par ladite feuille adhésive sensible à la pression, lorsqu'elle est maintenue à 80 °C pendant 30 minutes, et mesurée en fonction du procédé décrit ici, n'est pas supérieure à 1000 µg par gramme de feuille adhésive sensible à la pression.

7. Utilisation de la feuille adhésive sensible à la pression selon l'une quelconque des revendications 1 à 5 dans le but de fixer une pièce à recycler.
